# EUROPÄISCHE PATENTANMELDUNG

(11) **EP 1 714 813 A2**
(43) Veröffentlichungstag der Anmeldung: **25.10.2006**
(21) Anmeldenummer: 06001172.3
(22) Anmeldetag: 20.01.2006
(51) Int. Cl.: B60J 1/20

(54) **Rollo mit Einklemmschutz**

(30) Priorität: 21.04.2005 DE 102005018903; 23.06.2005 DE 102005029560
(71) Anmelder: BOS GmbH & Co. KG, 73760 Ostfildern (DE)
(72) Erfinder: Hansen, Melf, 75053 Gondelsheim (DE); Schlecht, Werner P., 71665 Vaihingen/Enz - Aurich (DE)
(74) Vertreter: Rüger, Barthelt & Abel Patentanwälte

(57) **Zusammenfassung**

Bei einem Fensterrollo ist je Führungsschiene eine Bremseinrichtung vorhanden, die dafür sorgt, dass zumindest ein Teil der Antriebskraft, die zum Bewegen des Fensterrollos erforderlich ist, in die Führungsschiene eingeleitet wird, wenn die sich bewegende Vorderkante des Fensterrollos gegen ein Hinderniss anstößt.

## Beschreibung

In zunehmendem Maße werden in Pkw's elektrisch betätigte Sonnenrollos verwendet. Diese Sonnenrollos kommen an den Seitenfenstern der hinteren Türen der Heckscheibe oder dem Glasdach zur Anwendung. Ein Fensterrollo für Heckscheiben ist beispielsweise aus der DE 103 51 040 Al bekannt. Das dort beschriebene Heckscheibenrollo weist eine unterhalb der Hutablage drehbar gelagerte Wickelwelle auf, an der mit einer Kante eine Rollobahn befestigt ist. Das freie Ende der Rollobahn ist mit einem Spriegel oder Zugstab verbunden. Der Zugstab ist rohrförmig und nimmt den Halsteil von zwei Führungsstücken auf, die an jedem Ende des Spriegels vorgesehen ist. Die Führungsstücke laufen in Führungsschienen, die seitlich neben der Heckscheibe in der inneren Seitenverkleidung angeordnet sind.

Der Antrieb des Spriegels geschieht über linienförmige Schubglieder, die in den Führungsschienen laufen. Die Antriebsglieder ihrerseits sind formschlüssig über ein Ausgangszahnrad eines Getriebemotors angetrieben.

Grundsätzlich den gleichen Aufbau zeigen die Rollos für Kraftfahrzeugseitenfenster oder auch die Rollos von Dachfenstern.

Wegen des elektromotorischen Antriebs besteht eine gewisse Einklemmgefahr. Der Motor ist hinsichtlich der Verfügung stehenden Antriebskraft einigermaßen überdimensioniert. Das Abschalten des Motors ist in aller Regel zeitgesteuert was bedeutet, dass beim Ausfahren des Rollos der Spriegel gegen einen formschlüssigen Anschlag läuft und dort mit hoher Kraft angepresst bleibt, solange bis durch das Zeitglied der Motor abgeschaltet wird.

Die Betätigungskraft ist verhältnismäßig hoch und es besteht durchaus eine gewisse Verletzungsgefahr, wenn jemand mit Körperteilen zwischen den sich bewegenden Spriegel und einem festen Anschlag im Fahrzeug gelangt. Die Gefahr ist insbesondere bei Seitenfenstern verhältnismäßig groß, wenn die Seitenscheibe heruntergelassen ist.

Ausgehend hiervon ist es Aufgabe der Erfindung ein Rollo für Kraftfahrzeugfenster zu schaffen, bei dem nicht die Gefahr des Einklemmens mit Körperverletzung besteht.

Diese Aufgabe wird erfindungsgemäß durch das Fensterrollo mit den Merkmalen des Anspruches 1 gelöst.

Die neue erfindungsgemäße Rolloanordnung eignet sich gleichermaßen für sämtliche Fenster in einem Kraftfahrzeug, d.h. sowohl für Heckfenster, für Seitenfenster als auch für Dachfenster. All diesen Rolloanordnungen ist gemeinsam, dass sie eine Wickelwelle aufweisen, an der mit einer Kante die Rollobahn befestigt ist. Die von der Wickelwelle abliegende Kante der Rollobahn ist mit einem Spriegel versehen.

Um die Rollobahn auf die Wickelwelle aufzuwickeln bzw. einzufahren ist mit der Wickelwelle ein Federmotor verbunden, der ein Vorspannmoment im Sinne des Aufwickelns der Rollobahn erzeugt.

Der Spriegel ist, je nach Ausführungsform des Rollos, wenigstens in einer Führungsschiene geführt. Diese Verhältnisse liegen beispielsweise bei dem dreieckförmigen Teil eines zweigeteilten hinteren Seitenfensters vor. Bei anderen Anwendungen ist der Spriegel an beiden Enden in zwei etwa parallel zueinander verlaufenden Führungsschienen geführt.

Der Antrieb des Spriegels geschieht mit einem linienförmigen Antriebsglied oder zweien, das oder die längs der Führungsschiene verläuft und zumindest eine Vorschubkraft im Sinne des Abziehens der Rollobahn von der Wickelwelle erzeugt. In einigen Fällen ist es auch vorgesehen, dass das Antriebsglied den Spriegel nicht nur vor sich her schiebt um die Rollobahn aufzuspannen, sondern den Spriegel auch in Richtung auf die Wickelwelle zieht, weil dann ein schwächerer Federmotor eingesetzt werden kann.

Damit bei der kraftbetätigten Bewegung des Spriegels jede Verletzungsgefahr ausgeschlossen ist, ist eine Bremseinrichtung vorhanden, die mit der Führungsschiene zusammenwirkt. Wenn auf den Spriegel eine Verzögerungskraft ausgeübt wird, die ein vorgegebenes Maß übersteigt, weil beispielsweise ein Körperteil droht eingeklemmt zu werden, wird die Bremseinrichtung aktiviert und leitet, zumindest einen Teil der Vorschubkraft in die Führungsschiene ein. Dadurch kann die Kraft, die auf das eingeklemmte Körperteil wirkt unterhalb des Verletzungsrisikos gehalten werden.

Die Kraft, die zum Aktivieren der Bremseinrichtung führt, ist so gewählt, dass sie höher ist, als die Kraft die benötigt wird, um die Rollobahn von der Wickelwelle abzuziehen, wobei die Rollobahn gegebenenfalls auch über Schlitzkanten schleifend gezogen wird. Die hierdurch entstehende Verzögerungskraft muss berücksichtigt werden und darf nicht zu einem Auslösen der Bremseinrichtung führen.

Die Bremseinrichtung kann so gestaltet sein, dass sie entweder nur in einer Richtung wirksam ist, beispielsweise lediglich während des Ausfahrens des Rollos, oder aber sie kann auch so gestaltet sein, dass sie bidirektional wirkt. Hierdurch soll beispielsweise verhindert werden, dass Scherverletzungen auftreten, wenn der über die Rollobahn seitlich überstehende Teil des Spriegels durch einen Führungsschlitz nach unten wegtaucht. Hier besteht eine Verletzungsgefahr, wenn der Spriegel in beiden Antriebsrichtungen formschlüssig mit dem Antriebsglied gekuppelt ist.

Die Bremseinrichtung ist mit einer Rückstelleinrichtung versehen, um die Bremseinrichtung in den gelüfteten oder Freilaufzustand zurück zu führen, wenn keine zusätzliche Verzögerungskraft auf den Spriegel einwirkt. Die Rückholeinrichtung wird sozusagen gleichzeitig als Sensor der darüber entscheidet, ob die Bremseinrichtung aktiviert wird oder in Ruhe bleibt.

Für die Bremseinrichtung kommen eine Reihe von Ausführungsformen in Frage. Gemäß der einen Lösung wird das Bremsglied von dem Führungsstück selbst gebildet, während im anderen Falle das Bremsglied gegenüber dem Führungsstück beweglich gelagert ist.

In beiden Fällen ist es möglich, die Bremseinrichtung lediglich reibschlüssig wirken zu lassen oder auch formschlüssig. Hierzu kann die Führungsschiene mit einer entsprechenden Verzahnung versehen sein, beispielsweise in Gestalt eines Rändels mit verhältnismäßig flachen kleinen Zahnlücken, die dicht aneinander liegen oder mit einer ausgeprägten tiefen Verzahnung.

Wenn das Bremsglied an dem Führungslied geführt ist, wird es als Ganzes oder es werden Teile davon gegen die Führungsschiene gedrängt, wenn die Bremswirkung zustande kommt. Dazu weist das Führungsstück Schrägflächen auf, die sich entsprechend das Bremsglied seitwärts bewegen.

Die Schrägflächen können in Gestalt einer Kegelfläche an einer Stirnseite des Führungsstücks vorhanden sein.

Es ist auch möglich das Bremsglied Elastomer auszuführen. Im Bremszustand wird es verformt, beispielsweise gestaucht, und legt sich so an der Führungsschiene an, um die Bremskraft zu erzeugen.

Im Übrigen sind Weiterbildungen der Erfindung Gegenstand von Unteransprüchen.

Beim Durchlesen der Figurenbeschreibung wird im Übrigen klar, dass eine Reihe von Abwandlungen und Merkmalskombinationen möglich sind, die im Einzelnen nicht geoffenbart sind. Die Ausführungsbeispiele beschränken sich auf die für das Verständnis der Erfindung grundlegenden Ausführungsbeispiele.

In der Zeichnung sind Ausführungsbeispiele des Gegenstandes der Erfindung dargestellt. Es zeigen:
- Fig. 1: den aufgebrochenen Fondbereich eines Pkw mit Blick auf die rechte hintere Innenseite, in einer schematisierten perspektivischen Darstellung;
- Fig. 2: das Seitenfensterrollo nach Fig. 1, in einer stark schematisierten Darstellung;
- Fig. 3: ein Ausführungsbeispiel des Führungsstücks, das beweglich an dem Spriegel gelagert ist und als Bremsglied wirkt;
- Fig. 4: das Ausführungsbeispiel nach Fig. 3, im Bremszustand;
- Fig. 5: ein Ausführungsbeispiel, bei dem das Bremsglied relativ zu dem Führungsglied beweglich ist;
- Fig. 6: das Ausführungsbeispiel nach Fig. 5, im Bremszustand;
- Fig. 7: ein Ausführungsbeispiel, bei dem das Bremsglied ein elastomerer Körper ist und
- Fig. 8: das Ausführungsbeispiel nach Fig. 7, im Bremszustand.

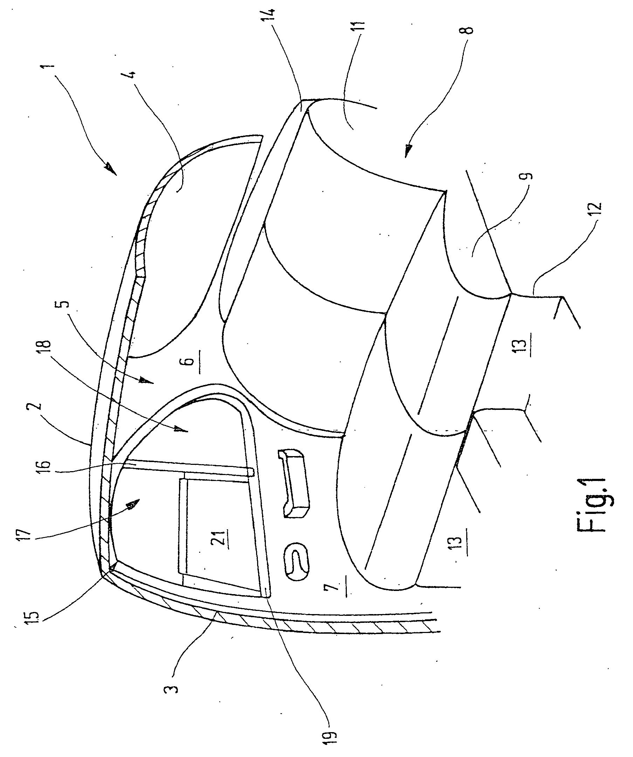

Fig. 1 stellt den aufgebrochenen abgeschnittenen Fondbereich eines Pkw dar. Die Figur veranschaulicht einen Blick auf die rechte Innenseite, die zu der nicht veranschaulichten linken Innenseite spiegelbildlich ist. Die Darstellung ist vereinfacht. So sind beispielsweise Karosserinnenstrukturen, wie Versteifung und Befestigungsmittel nicht gezeigt, da ihre Darstellung für das Verständnis der Erfindung nicht erforderlich ist. Ebenso ist die Darstellung der Karosserie schematisiert und lässt die dort vorhandenen Hohlräume nicht erkennen.

Der veranschaulichte Karosserieabschnitt 1 weist ein Dach 2 auf, von dem seitlich eine B-Säule 3 nach unten zu einer nicht gezeigten Bodengruppe führt. Die entsprechende B-Säule wäre auf der weggebrochenen Seite des Fahrzeugs zu denken. Die B-Säulen sind geneigt, so dass ihr oberes Ende zum Fahrzeugheck verlagert ist.

Das Dach 2 geht an seiner Hinterkante in ein Heckfenster über. Seitlich endet das Heckfenster an einer C-Säule 5, die sich im Abstand zu der B-Säule 3 befindet. Die C-Säule 5 trägt eine Innenverkleidung 6.

Zwischen der B-Säule 3 und der C-Säule 6 ist an der B-Säule eine hintere rechte Seitentür 7 in bekannter Weise anscharniert.

Auf der Höhe der hinteren rechten Seitentür 7 befindet sich eine Rücksitzbank 8, zu der eine Sitzfläche 9 sowie eine Rücksitzlehne 11 gehören. Die Rücksitzfläche 9 liegt auf einer Sockelfläche 12, die zu einer Bodengruppe gehört und vor der Fußräume 13 ausgebildet sind.

Auf der Höhe der Oberkante der Rücksitzlehne 11 erstreckt sich eine Hutablage 15 zu der Unterkante der Heckscheibe 4.

Die hintere rechte Seitentür 7 ist in der für Limousinen üblichen Weise mit einem Seitenfenster 15 versehen. Das Seitenfenster 15 wird durch eine etwa vertikal verlaufende Strebe 16 in ein im Wesentlichen viereckiges Fensterfeld 17 sowie ein etwa dreieckiges Fensterfeld 18 aufgeteilt. Am unteren Ende werden die beiden Felder 17 und 18 von einer Fensterbrüstung 19 begrenzt. Die Fensterbrüstung 19 verläuft unter einem Winkel kleiner als 90° zu einer vorderen Fensterkante 20.

Die in dem Fensterfeld 17 vorhandene Scheibe ist in bekannter Weise auf und ab zu bewegen, wozu sie unter anderem in der vertikalen Strebe 16 in bekannter Weise geführt ist.

Das Fensterfeld 17 ist durch eine zugeordnete Rollobahn 21 wahlweise abzuschatten, die durch einen Schlitz in der Fensterbrüstung 19 aus dem Innenraum der Tür 7 ausziehbar ist. Der Antriebsmechanismus für die Rollobahn 21 befindet sich in dem Innenraum der Tür 7 unterhalb der Fensterbrüstung 19.

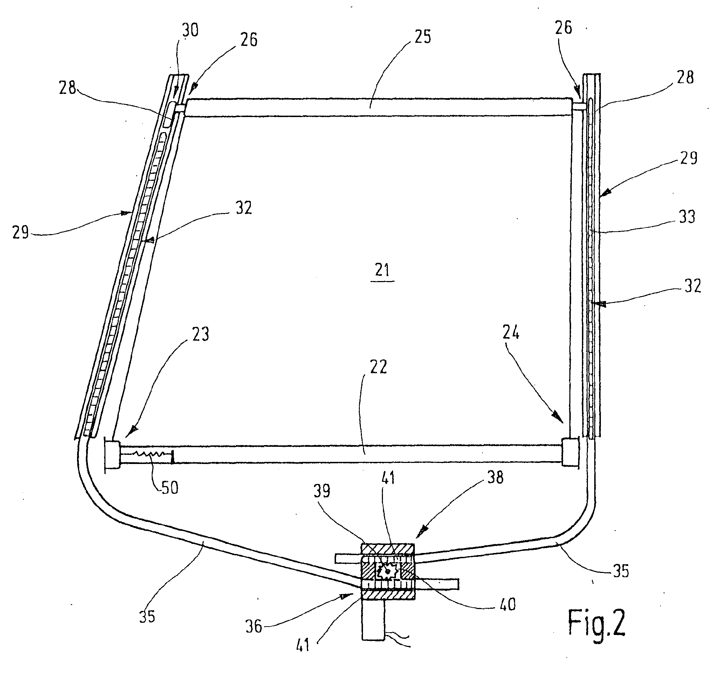

Fig. 2 zeigt die wesentlichen Bestandteile, die dazu vorgesehen sind, die Rollobahn 21 anzutreiben, zu führen bzw. im nicht gebrauchten Zustand aufzubewahren.

Die Rollobahn 21 weist einen Zuschnitt auf, der etwa der Fläche des Fensterfeldes 17 entspricht und durch im Wesentlichen gerade Kanten angenähert ist. Die Rollobahn 21 ist mit ihrer Unterkante an einer Wickelwelle 22 befestigt, die zwischen Wickelwellenlageranordnungen 23 und 24 drehbar und axial beweglich gelagert ist.

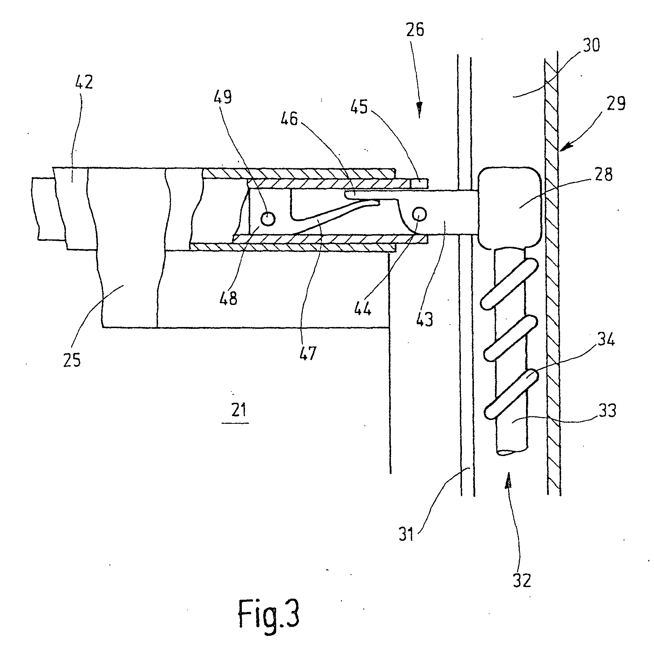

Die von der Wickelwelle 22 abliegende Kante der Rollobahn 21 bildet eine schlauchförmige Schlaufe 25, durch die hindurch eine Zugstabanordnung hindurch führt. Von der Zugstabanordnung sind lediglich deren außen liegende Führungsarme 26 zu erkennen. Der Aufbau der Führungsarme 26 un der Zugstabanordnung ist unten anhand der Figur 3 näher beschrieben. Der Führungsarm 26 trägt endseitig einen Führungskörper 28.

Um die Rollobahn 21 während einer Ausfahrbewegung zu führen, verlaufen seitlich neben der ausgezogenen Rollobahn 21 zwei Führungsschienen 29. Jede Führungsschiene 29 enthält eine in Längsrichtung durchlaufende Nutenkammer 30, die sich über einen Nutenschlitz 31 in Richtung auf die Rollobahn 21 öffnet und im Querschnitt kreisförmig ist.

In den beiden Nutenkammern 30 der beiden Führungsschienen 29 laufen axial beweglich zugehörige und schraubenförmig verzahnte Schubglieder 32. Jedes Schubglied 32 besteht aus einer zylindrischen Seele 33, um die herum schraubenförmig eine erhabene Wendel 34 umläuft. Die Wendel 34 bildet einen schraubenförmig um die Seele 33 herumlaufenden Zahn. Das Schubglied 32 hat somit die Gestalt einer schräg verzahnten flexiblen Zahnstange mit kreisförmigem Querschnitt.

Die Schubglieder 32 sind an sich nur sehr wenig knicksteif, weshalb sie in der Nutenkammer 30 ausknicksicher geführt sind.

Am unteren Ende jeder Führungsschiene 29 schließt sich ein Führungsrohr 35 an, das die Nutenkammer 30 der betreffenden Führungsschiene 29 mit einem Getriebemotor 36 verbindet.

Zu dem Getriebemotor 36 gehört ein permanent erregter Gleichstrommotor 37, der ein Getriebe antreibt, das sich in einem Getriebegehäuse 38 befindet. Auf einer Ausgangswelle 39 sitzt ein Ausgangszahnrad 40, das so gestaltet ist, dass es formschlüssig in die Verzahnung der beiden Schubglieder 32 eingreifen kann. Damit die Schubglieder 32 seitlich nicht ausweichen können, sind sie in Bohrungen 41 geführt, die tangential an dem Ausgangszahnrad 40 vorbei laufen. An diese Bohrungen 41 schließen die Führungsrohre 35 an.

In Verlängerung der Bohrungen 41 können noch Speicherrohre vorhanden sein, um den nicht aktiven Teil des Schubglieds geordnet zu führen.

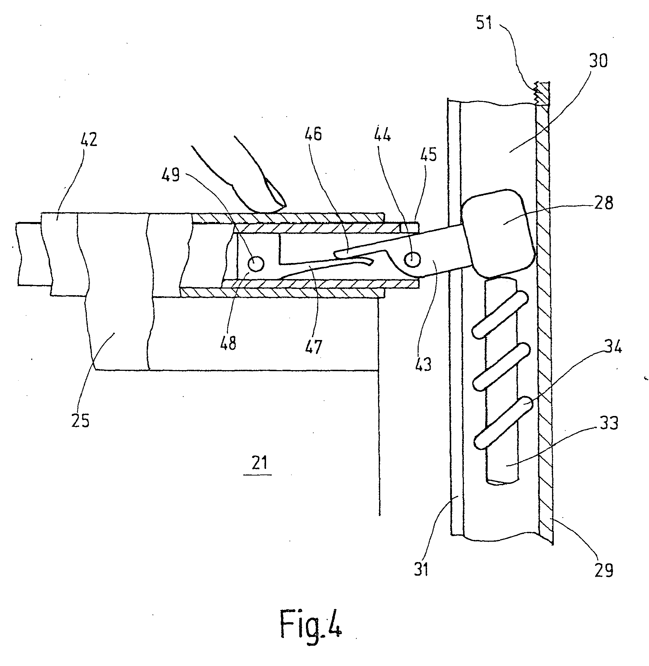

Der genaue Aufbau der Führungsarme 26, Führungsköper 28 und ihr Zusammenwirken mit den Führungsschienen 29 ist nachfolgend anhand der Fig. 3 und 4 erläutert.

Die Fig. 3 und 4 zeigen, bezogen auf Fig. 2 das rechte Ende der Zugstabanordnung, zusammen mit einem Ausschnitt der Rollobahn 21. Die im Zusammenhang mit Fig. 4 gegebene Erläuterung gilt sinngemäß auch für das andere Ende der Zugstabanordnung und das dort vorhandene Zusammenwirken mit der Führungsschiene 29 an der linken Seite.

Gemäß Fig. 3 weist der Führungskörper 28 eine Gestalt auf, die im Querschnitt an den Querschnitt der Nutenkammer 30 angepasst ist. Er weist eine Ausdehnung in Längsrichtung der Führungsschiene 29 gesehen, auf, die nur unwesentlich größer als der Durchmesser der Nutenkammer 30 ist. Dadurch kann erreicht werden, dass der Führungskörper leicht durch die Nutenkammer 30 läuft, wenn seine Längsachse, also die Achse die in Bewegungsrichtung liegt, parallel zu der Achse der Nutenkammmer 30 ausgerichtet ist. Der leichte Lauf in der Führungskammer 30 wird hingegen verhindert, wenn sich der Führungskörper 28 in der Nutenkammer 30 geringfügig schräg stellt. Es tritt ein Klemmeffekt auf, wie er von Schubkästen oder Schubladen hinlänglich bekannt ist. Auf diese Weise kann der Führungskörper 28 wie ein Bremsglied wirken dass die Vorschubkraft des Antriebsgliedes 32 in die Führungsschiene 29 einleitet.

Wie Fig. 3 erkennen lässt, steckt in der schlauchförmigen Schlaufe 25 als Teil der Zugstabanordnung ein rohrförmiger Spriegel 42, der unverrückbar mit der Schlaufe 25 verbunden ist. In dem Spriegel 42 steckt längsverschieblich der Führungsarm 26, der seinerseits rohrförmig ausgeführt ist. Aufgrund der teleskopartigen Verschiebbarkeit des Führungsarms 26 passt sich die über alles gesehene Breite der Zugstabanordnung an den sich variierenden und in Richtung auf die Wickelwelle zunehmenden Abstand zwischen den beiden Führungsschienen 29 an.

Der Führungskörper 28 ist mit dem Führungsarm 26 über einen Verbindungsarm 43 verbunden, der durch den Führungsschlitz 31 aus der Führungsschiene 29 herausführt. Der Verbindungsarm 43 ragt in den Führungsarm 26 hinein und ist mit diesem über einen Scharnierbolzen 44 verbunden. Der Scharnierbolzen 44 gestattet es, dass der Führungsarm 43 bezüglich einer Schwenkachse geschwenkt werden kann, die senkrecht auf der Zeichenebene steht. Die Zeichenebene entspricht der Aufspannebene der Rollobahn 21 im Bereich des Spriegels 42.

Damit der Verbindungsarm 43, der etwa rechteckigen Querschnitt hat, hinreichend schwenken kann, ist der Spriegel 42 auf der Höhe der Scharnierachse 44 an der vorauseilenden Kante mit einer Nut 45 versehen.

Im Inneren des Spriegels 42 setzt sich der Führungsarm 43 in einem kurzen Fortsatz 46 fort, der in der Ruhestellung, wie gezeigt, an jener Innenseite des Spriegels 42 anliegt, die auch die Nut 45 enthält. Damit der Fortsatz 46 in der anliegenden Stellung gehalten bleibt, ist eine Blattfeder 47 vorgesehen, die beispielsweise eine Kunststofffeder ist und die einstückig von einem Halteblock 48 ausgeht, der bei 49 mit dem Führungsarm 43 vernietet ist.

Die Wirkungsweise der erläuterten Anordnung ist wie folgt:

Im eingefahren Zustand liegt die Schlaufe 25 unmittelbar benachbart zu der Wickelwelle 22, d.h. sie ist unterhalb der Brüstung 19 des Seitenfensters 17 zurückgezogen. Wenn der Benutzer, ausgehend von dieser Stellung die Rollobahn 21 vor dem Fenster 17 aufspannen will, setzt er den Getriebemotor 36 in Gang. Hierdurch werden synchron die beiden Schubglieder 32 in die zugehörigen Führungsschienen 29 vorgeschoben. Dabei drücken sie an beiden Seiten der Rollobahn 21 die Führungskörper 28 nach oben, d.h. sie schieben diese vor sich her. Gegen diese Vorschubbewegung wird ein Federmotor 50, wie er in Fig. 2 schematisch angedeutet ist. Die Kraft des Federmotors 50 ist ständig bestrebt, die Rollobahn 21 auf die Wickelwelle 22 auf zu wickeln d.h. zurückzuziehen bzw. festzuhalten.

Die Kraft der Blattfeder 47 erzeugt an dem Fortsatz 46 des Verbindungsarms 43 ein solches Haltedrehmoment, dass der Führungskörper 28 in einer Stellung bleibt, in der er leicht durch die Nutenkammer 30 gleiten kann, obwohl die Schubglieder 32 an dem Führungskörper 28 ein Drehmoment erzeugen, das den Verbindungsarm im Gegenuhrzeigersinne drehen will.

Wenn hingegen, wie in Fig. 4 gezeigt, zusätzlich zu der Kraft, die der Federmotor 50 erzeugt, eine weitere Kraft auf die in Bewegungsrichtung vorne liegende Kante der Rollobahn 21 einwirkt, d.h. gegen den Spriegel 42 drückt, erzeugt das Vorschubglied 32 an dem Führungskörper 28 gegenüber der Scharnierachse 44 ein Drehmoment, das größer ist als das Rückstellmoment, das von der Feder 47 herrührt. Dadurch kann sich, wie oben beschrieben, der Führungskörper 28 in der Führungsnut 30 schräg stellen und sich in der Nutenkammer 30 verkanten. Je nach Dimensionierung des Führungskörpers 28 wird zumindest ein Teil der Vorschubkraft des Antriebsgliedes 32 über den jetzt verkanteten Führungskörper 28 in die Führungsschiene 29 eingeleitet, so dass körperverletzende Quetschungen ausgeschlossen sind. Bei entsprechender Gestaltung kann sogar sich der Führungskörper 28 soweit verklemmen, bis die Antriebskraft des Führungsgliedes 32 vollständig in die Führungsschiene 29 eingeleitet wird.

Sobald die Kraft verschwindet, die bestrebt ist, die Vorderkante der Rollobahn 21 festzuhalten, dreht die Blattfeder 47 den Fortsatz 46 und damit auch den Verbindungsarm 43 wieder in die Stellung nach Fig. 3 zurück und das Rollo kann normal laufen.

Bei der beschriebenen Bremseinrichtung, bei der das Bremsglied durch den Führungskörper 28 gebildet ist, erfolgt die Bremswirkung durch Reibschluss.

Es ist auch möglich, die Nutenkammer 30 auf der dem Nutenschlitz 31 gegenüberliegenden Seite mit einer Geradrändelung zu versehen, wodurch auf der den Nutenschlitz 31 gegenüberliegenden Seite eine Vielzahl kleiner, leistenförmiger Zähne entsteht, die quer zu der Längsrichtung der Führungsschiene 29 ausgerichtet sind und deren Länge etwa der Breite des Nutenschlitzes 31 entspricht. Eine solche Verzahnung ist in Fig. 4 schematisch bei 51 gezeigt. Es ist unschwer möglich, an dem Führungskörper 28 an jener Stelle eine komplementäre Verzahnung 51 vorzusehen, die der Verzahnung 51 der Nutenkammer 30 gegenüberliegt. Bei einem Verkanten des Führungskörpers 28 in der oben beschriebenen Weise würden sich die Verzahnungen 51 ineinander verhaken, so dass eine formschlüssige Bremswirkung, d.h. eine Blockierung zustande kommt.

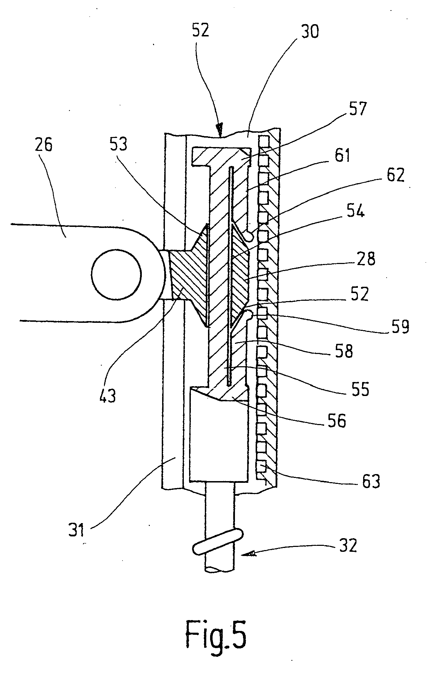

Fig. 5 zeigt eine Ausführungsform mit einem separaten Bremsglied 52, das gegenüber dem Führungskörper 28 beweglich ist. Bei der Darstellung nach Fig. 5 werden Teile, die bereits im Zusammenhang mit der vorher in Figuren beschrieben und funktions- oder baugleich sind, mit demselben Bezugszeichen versehen und nicht erneut beschrieben.

Der Führungskörper 28 ist starr und unbeweglich an dem Verbindungsarm 43 befestigt. Er hat eine zylindrische Gestalt, die an beiden Stirnenden in Kegelstumpfe 52 und 53 übergeht. Der Verbindungsarm 43 ist starr und unbeweglich mit dem Führungsarm 26 verbunden und diese nur in dem Spriegel 43 längsverschieblich. Der Führungskörper 28 ist so ausgerichtet, dass er leicht durch die Führungskammer 30 läuft.

Durch den Führungskörper 28 führt eine Durchgangsbohrung 54 hindurch, die der verschieblichen Aufnahme einer Stange 55 des Bremsgliede 52 dient. Die Stange 55 trägt an beiden Enden zylindrische Köpfe 56 und 57. Von dem Kopf 56 ragt in Richtung auf den Führungskörper 28 ein Federarm 58, der an seinem freien Ende mit einer Nase 59 versehen ist. An dem Kopf 57 ist ebenfalls ein Federarm 61 vorhanden, der an seinem freien Ende eine Nase 62 trägt.

Die dem Nutenschlitz 31 gegenüberliegende Rückwand der Nutenkammer 30 enthält, äquidistant verteilt, kleine Ausnehmungen 63 in die die Nase 59 und 61 eingreifen können.

Die genaue Dimensionierung der Anordnung ergibt sich aus der nachfolgenden Funktionsbeschreibung:

Mit dem Kopf 56 ist das Antriebsglied 32 zug- und druckfest verbunden. Damit kann auf das Bremsglied 52 sowohl eine in Fig. 5 nach oben wirkende Kraft als auch eine nach unten wirkende Kraft übertragen werden. Die nach oben wirkende Kraft entspricht dem Ausfahren der Rollobahn, während die nach unten wirkende Kraft beim Einfahren der Rollobahn 21 wirksam ist. Die nach unten oder ziehend wirkende Kraft unterstützt die Wirkung des Federmotors 50 und überwindet die Gleitreibungskräfte des Führungskörpers 28 und des Bremsgliedes 52 in der zugehörigen Führungsschiene 29.

Soweit keine zusätzliche Fremdkraft, die verzögernd wirken würde, auf die Vorderkante der Rollobahn 21 einwirkt, nehmen die beiden Federarme 61 und 58 die in Fig. 5 gezeigte Stellung ein. In dieser Stellung sind die Nasen 59 und 62 gegenüber der Außenkontur der Köpfe 56 und 57 zurückgezogen und können nicht an der benachbarten Wand der Nutenkammer 30 streifen. Der Führungskörper 28 und das Bremsglied 52 laufen leicht durch die Nutenkammer 30 in deren Längsrichtung. Diese Relativstellung zwischen dem Bremsglied 52 und dem Führungskörper 28 wird durch die Federarme 58 und 61 in Verbindung mit den kegeligen Stirnflächen 52 und 53 aufrecht erhalten. Die Rückstellkraft der Federarme 58 und 61 ist so gewählt, dass eine beträchtliche Kraft erforderlich ist, um das Bremsglied 52 gegenüber dem Führungskörper 28 bewegen zu können. Bei einer solchen Relativbewegung werden durch die Schrägflächen infolge der Kegelstümpfe 52 und 53 die Federarme 61 oder 58 radial nach außen gedrängt.

Bei der Ausführungsform nach Fig. 5 wird die Antriebskraft des Antriebsglieds 32 über die Schragflächen der Federarme 58, 61 und des Führungkörpers 28 übertragen.

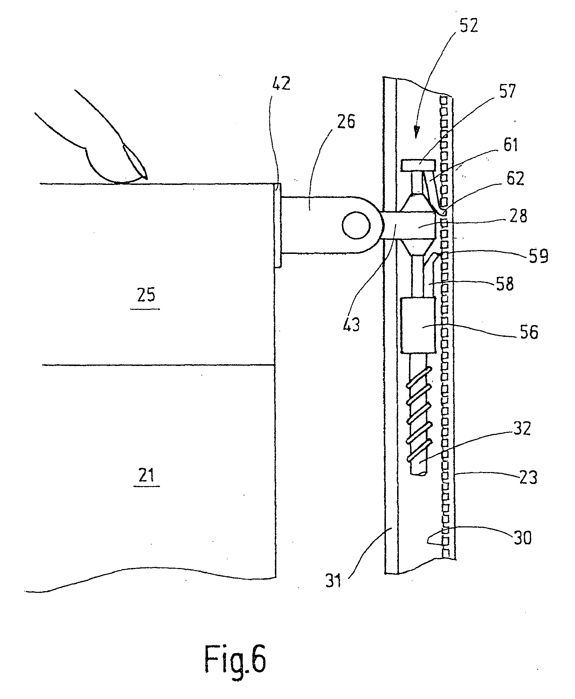

Wenn wie in Fig. 6 schematisch angedeutet, ein Körperteil beim Ausfahren in den Bewegungsweg der Vorderkante der Rollobahn 21 kommt, entsteht eine zusätzliche Kraft, die sich der Rückzugskraft des Federmotors 50 überlagert. Diese Kräfte sind bestrebt, den Führungskörper 28 gegenüber dem Bremsglied 52 zu verzögern. Da das Antriebsglied 32 jedoch weiterhin vorgeschoben wird, läuft der untere Federarm 58 zunehmend auf den Kegelstumpf 52 auf, und wird radial nach außen gedrängt. Abhängig von der Kraft wird der Federarm 58 soweit nach außen gedrängt, bis die am freien Ende befindliche Nase 59 in eine der Ausnehmungen 63 einrastet. Damit ist eine weitere Bewegung blockiert und es kann keine gefährliche Quetschung auftreten.

Fig. 6 veranschaulicht die Situation, wenn die Kraft nicht an der Vorderkante angreift und ein Ausfahren behindert, sondern wenn beispielsweise beim Einfahren sich ein Gegenstand zwischen dem Führungsarm 26 und der Fensterbrüstung 19 einklemmt. Um hier eine Scherverletzung zu vermeiden, wird der obere Federarm 61 in der zuvor erläuterten Weise nach außen gedrängt, und zwar zufolge der Wirkung des Kegelstumpfes 53. Die Nase 62 dringt in eine der Ausnehmungen 63 ein und blockiert ein weiteres zurückziehen der Vorderkante bzw. des Führungsarms 26. Dadurch wird eine Scherverletzung ausgeschlossen.

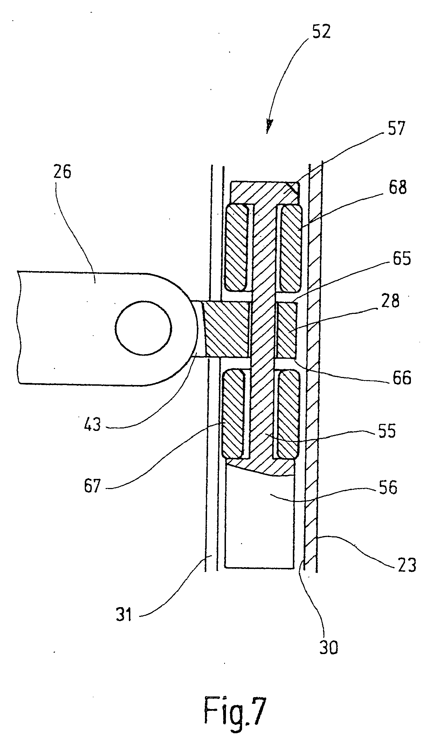

Fig. 7 zeigt eine Ausführungsform, bei der das Bremsglied 52 teilweise elastomer ausgebildet ist. Die Anordnung ähnelt der Anordnung nach Fig. 5. Der Führungskörper 28 ist mit Planflächen 65 und 66 versehen, die in Bewegungsrichtung zeigen. Auf der Stange 55 des Bremsgliedes 52 sitzen zwischen dem Führungskörper 28 und den Köpfen 56 und 57 des Bremsgliedes jeweils zwei röhrförmige Elastomerkörper 67 und 68.

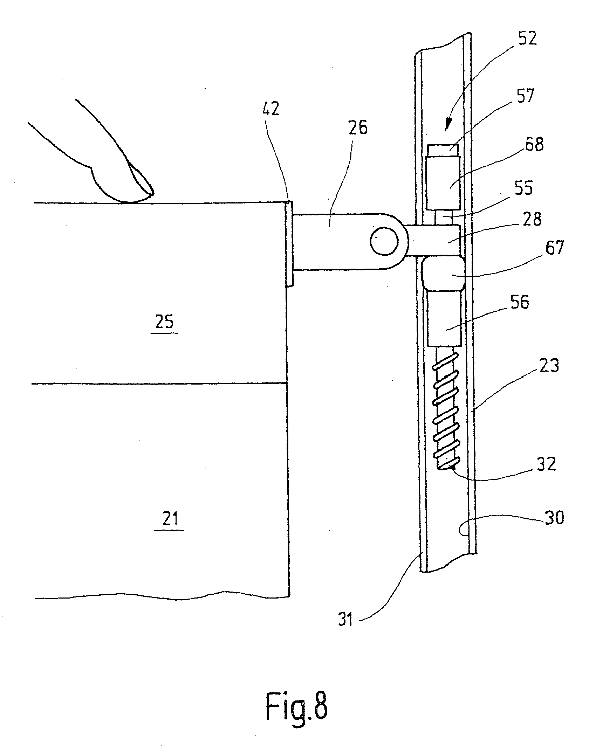

Wenn eine der Situationen nach den Fig. 4 oder 6 auftaucht wird, je nach Bewegungsrichtung, einer der beiden Elastomerkörper 67 und 68 zwischen dem Führungskörper 28 und dem benachbarten Kopf 56 oder 57 eingeklemmt und gestaucht. Hierdurch wird der betreffende Elastomerkörper 67 oder 68 komprimiert und, wie Fig. 8 zeigt, gegen die Innenwand der Nutenkammer 30 angedrückt. Dadurch wird zumindest ein Teil der Antriebskraft, die von dem Antriebsglied 32 herrührt, in die Führungsschiene 29 eingeleitet, noch ehe gefährliche Verletzungen auftreten können. Fig. 8 zeigt die Situation beim Ausfahren. Beim Einfahren tritt eine ähnliche Situation auf, mit dem Unterschied, dass nicht der Elastomerkörper 67 sondern der Elastomerkörper 68 zusammengedrückt wird.

Die Ausführungsformen nach den Fig. 5 und 7 sind bidirektional wirkend, während Fig. 3 eine Anordnung zeigt, die lediglich beim Ausfahren wirksam ist. Das Einfahren muss nicht geschützt werden, weil beim Einfahren bei der Ausführungsform nach Fig. 3 das lose Anstoßen des Antriebsglieds 32 jederzeit zurücktauchen kann, ohne eine zusätzliche Kraft zu erzeugen. Es ist jedoch unschwer zu erkennen, dass die Ausführungsformen nach den Fig. 5 und 7 ebenfalls undirektional ausgeführt werden können, indem bei den Ausführungsformen nach Fig. 5 der obere Federarm 61 wegfällt und das Antriebsglied 32 lediglich stumpf an dem unteren Kopf 56 anliegt, anstatt mit diesem zug- und druckfest verbunden zu sein.

Bei dem Ausführungsbeispiel nach Fig. 7 kann der obere Elastomerkörper 68 ebenfalls entfallen, wenn auch hier das Antriebsglied 32 anstatt zug- und druckfest mit dem unteren Kopf des Bremsgliedes 52 verbunden zu sein lediglich druckfest anliegt.

Bei einem Fensterrollo ist je Führungsschiene eine Bremseinrichtung vorhanden, die dafür sorgt, dass zumindest ein Teil der Antriebskraft, die zum Bewegen des Fensterrollos erforderlich ist, in die Führungsschiene eingeleitet wird, wenn die sich bewegende Vorderkante des Fensterrollos gegen ein Hinderniss anstößt.

## Patentansprüche

1. Rolloanordnung für Kraftfahrzeuge,
mit einer Wickelwelle (22),
mit einer Rollobahn (21), die mit einer Kante an der Wickelwelle (22) befestigt ist und die eine von der Wickelwelle (22) abliegende Kante aufweist, an der ein Spriegel (42) befestigt ist,
mit einem Federmotor (50), der mit der Wickelwelle (22) gekuppelt ist und auf die Wickelwelle (22) ein Drehmoment ausübt, das im Sinne eines Aufwickelns der Rollobahn (21) auf die Wickelwelle (22) wirksam ist,
mit wenigstens einer Führungsschiene (29), die neben der aufgespannten Rollobahn (29) verläuft und durch die der Spriegel (42) an wenigstens einem Ende geführt ist,
mit einem linienförmigen Antriebsglied (32), das längs der Führungsschiene (29) verläuft und zumindest eine Vorschubkraft im Sinne eines Abziehens der Rollobahn (21) von der Wickelwelle (22) erzeugt,
mit einer Bremseinrichtung (28,52,67,68), die mit dem Antriebsglied und dem Spriegel zusammenwirkt, derart, dass bei einer auf den Spriegel ausgeübten Verzögerungskraft, die ein vorgegebenes Maß übersteigt, die Bremseinrichtung (28,52,67,68) zumindest einen Teil der Vorschubkraft in die Führungsschiene einleitet.

2. Rolloanordnung nach Anspruch 1, **dadurch gekennzeichnet, dass** die Bremseinrichtung (28,52,67,68) entweder nur bei einer Bewegung des Spriegels (42) im Sinne des Abziehens der Rollobahn (21) von der Wickelwelle (22) oder in beiden Bewegungsrichtungen wirkt.

3. Rolloanordnung nach Anspruch 1, **dadurch gekennzeichnet, dass** die Bremseinrichtung (28,52,67,68) federe- , lastische Rückstellmittel (47,58,61,67,68) aufweist, die die Bremseinrichtung (28,52,67,68) in der gelüfteten Stellung halten oder zurückführen.

4. Rolloanordnung nach Anspruch 1, **dadurch gekennzeichnet, dass** die federelastischen Rückstellmittel (47,58,61,67,68) die Differenz zwischen der Vorschubkraft und der Verzögerungskraft zu erfassen.

5. Rolloanordnung nach Anspruch 1, **dadurch gekennzeichnet, dass** die Größe der Verzögerungskraft (), die zum Aktivieren der Bremseinrichtung (28,52,67,68) führt größer ist als die an dem Spriegel (41) wirksame Rückzugskraft wie sie von dem Federmotor (50) ausgeübt wird.

6. Rolloanordnung nach Anspruch 1, **dadurch gekennzeichnet, dass** der Spriegel (42) wenigsten ein mit der Führungsschiene (29) zusammenwirkendes Führungsstück (28) aufweist.

7. Rolloanordnung nach Anspruch 1, **dadurch gekennzeichnet, dass** der Spriegel (42) je Führungsschiene (29) ein mit der Führungsschiene (29) zusammenwirkendes Führungsstück (28) aufweist.

8. Rolloanordnung nach Anspruch 6, **dadurch gekennzeichnet, dass** das Führungsstück (28) ein Teil der Bremseinrichtung (28,52,67,68) ist.

9. Rolloanordnung nach Anspruch 1, **dadurch gekennzeichnet, dass** das Führungsstück (28) mit der Bremseinrichtung (28,52,67,68) zusammenwirkt.

10. Rolloanordnung nach Anspruch 6, **dadurch gekennzeichnet, dass** das Führungsstück (28) an dem Spiegel (42) beweglich gehalten ist, derart, dass es in der Ruhestellung leichtgängig längs der Führungsschiene (29) läuft und in der anderen Relativstellung gegenüber dem Spriegel (42) sich gegenüber der Führungsschiene (29) verklemmt.

11. Rolloanordnung nach Anspruch 6, **dadurch gekennzeichnet, dass** das Führungsstück (28) um eine Achse (44) schwenkbar ist, die senkrecht auf einer Ebene steht, die von der aufgespannten Rollobahn (21) an der Stelle des Spriegels (42) definiert ist.

12. Rolloanordnung nach Anspruch 6, **dadurch gekennzeichnet, dass** das Führungsstück (28) in der Bremsstellung formschlüssig oder reibschlüssig mit der Führungsschiene (29) zusammenwirkt.

13. Rolloanordnung nach Anspruch 6, **dadurch gekennzeichnet, dass** das Führungsstück (28) mit dem zugehörigen linienförmigen Antriebsglied (32) lediglich in einer Bewegungsrichtung des Spriegels (42) mit dem Spriegel (42) bzw. dem Führungsstück (28) formschlüssig zusammenwirkt.

14. Rolloanordnung nach Anspruch 1, **dadurch gekennzeichnet, dass** die Bremseinrichtung (28,52,67,68) ein Bremsglied (28,52,67,68) aufweist, dass form- oder reibschlüssig mit der Führungsschiene (29) zusammenwirkt.

15. Rolloanordnung nach den Ansprüchen 1 und 14, **dadurch gekennzeichnet, dass** das Bremsglied (52,67,68) an dem Führungsstück (28) beweglich geführt ist.

16. Rolloanordnung nach den Ansprüchen 1 und 14, **dadurch gekennzeichnet, dass** das Bremsglied (52,67,68) an dem Führungsstück (28) längsverschieblich geführt ist, wobei die Bewegungsrichtung des Bremsglieds (52,67,68) gegenüber dem Führungsstücks (28) parallel zur Bewegungsrichtung des Führungsstücks (28) in der Führungsschiene (29) liegt.

17. Rolloanordnung nach Anspruch 1, **dadurch gekennzeichnet, dass** das Führungsstück (28) zwei einander gegenüberliegende Stirnflächen (52,53,65,66) aufweist, die in Richtung parallel zu der Bewegungsrichtung des Führungsstücks (28) zeigen.

18. Rolloanordnung nach Anspruch 17, **dadurch gekennzeichnet, dass** wenigstens eine der Stirnflächen (52,53) kegelig ausgebildet ist.

19. Rolloanordnung nach Anspruch 18, **dadurch gekennzeichnet, dass** das Bremsglied (28,52,67,68) einen Fortsatz (58,61) aufweist, der mit der kegeligen Stirnfläche (52,53) des Führungsglieds (28) zusammenwirkt.

20. Rolloanordnung nach Anspruch 1, **dadurch gekennzeichnet, dass** das Bremsglied (28,52,67,68) eine Nase (59,62) trägt, die mit einer Verzahnung (63) an der Führungsschiene (29) zusammenwirkt.

21. Rolloanordnung nach Anspruch 1, **dadurch gekennzeichnet, dass** das Bremsglied (67,68) ein Elastomer ist.

22. Rolloanordnung nach Anspruch 1 oder 18, **dadurch gekennzeichnet, dass** das Bremsglied (28,52,67,68) neben einer Stirnseite (65,66) des Führungsgliedes (28) angeordnet ist und an diesem verankert ist.

23. Rolloanordnung nach Anspruch 21, **dadurch gekennzeichnet, dass** das elastomere Bremsglied (28,52,67,68) relativ gegenüber dem Führungsglied (28) beweglich ist in einer Richtung parallel zur Bewegungsrichtung des Führungsstücks (28) längs der Führungsschiene (29).

24. Rolloanordnung nach Anspruch 21, **dadurch gekennzeichnet, dass** das elastomere Bremsglied (28,52,67,68) kinematisch zwischen dem Führungsglied (28) und dem Antriebsglied (32) liegt.

25. Rolloanordnung nach Anspruch 1, **dadurch gekennzeichnet, dass** die Führungsschiene (29) eine Führungsnut enthält, die sich aus einer Nutenkammer (30) und einem Nutenschlitz (31) zusammensetzt.

26. Rolloanordnung nach Anspruch 1, **dadurch gekennzeichnet, dass** die Nutenkammer (30) einen kreisförmigen Querschnitt aufweist.

27. Rolloanordnung nach Anspruch 1, **dadurch gekennzeichnet, dass** das Führungsstück (28) über ein Halsteil (26) mit dem Spriegel (42) verbunden ist.

28. Rolloanordnung nach Anspruch 27, **dadurch gekennzeichnet, dass** das Halsteil (26) gegenüber dem Spriegel (42) in einer Richtung verschiebbar ist, die parallel zur Längserstreckung des Spriegels (42) liegt.

29. Rolloanordnung nach Anspruch 25, **dadurch gekennzeichnet, dass** das Halsteil (26) in der Nähe der Führungsschiene (29) bzw. des Führungsstücks (28) Querabmessungen aufweist derart, dass das Halsteil (26) durch den Führungsschlitz (31) hindurch passt.
